# FASCICULE DE BREVET EUROPEEN

(11) **EP 2 941 400 B1**
(45) Date de publication et mention de la délivrance du brevet: **02.08.2017**
(21) Numéro de dépôt: 13815086.7
(22) Date de dépôt: 13.12.2013
(51) Int. Cl.: B66F 17/00, B66F 9/065

(54) **PROCEDE DE REGLAGE D'UNE MACHINE DE MANUTENTION, ET MACHINE DE MANUTENTION CORRESPONDANTE**
VERFAHREN ZUR EINSTELLUNG EINER BEARBEITUNGSMASCHINE UND ENTSPRECHENDE BEARBEITUNGSMASCHINE
METHOD FOR ADJUSTING A HANDLING MACHINE, AND CORRESPONDING HANDLING MACHINE

(30) Priorité: 03.01.2013 FR 1350032
(43) Date de publication de la demande: 11.11.2015
(73) Titulaire: MANITOU BF, 44150 Ancenis (FR)
(72) Inventeur: HEREL, Jean-Philippe, 44240 La Chapelle sur Erdre (FR)
(74) Mandataire: Kaspar, Jean-Georges
(86) Numéro de dépôt international: PCT/FR2013/053061
(87) Numéro de publication internationale: WO 2014/106700

(56) Documents cités:
- EP-A1- 2 520 536
- EP-A2- 0 343 839

## Description

L'invention est relative à un procédé de réglage d'une machine de manutention.

L'invention est également relative à une machine de manutention comportant une pluralité d'actionneurs et au moins un organe de commande d'actionneur, apte à mettre en oeuvre un procédé de réglage selon l'invention.

On connaît des machines de manutention à tourelle, commercialisées par la société Manitou BF de droit français.

Ces machines de manutention de type connu comportent un bras télescopique inclinable et une tourelle rotative portant le bras télescopique.

À l'extrémité distale du bras télescopique, on monte généralement un outil de travail ou un accessoire pour réaliser une tâche spécifique.

Ces machines de manutention de type connu comportent un poste de conduite muni de deux poignées de commande positionnées de part et d'autre des accoudoirs du siège de l'opérateur.

Les poignées de commande permettent de commander l'ensemble des actionneurs de la machine de manutention, notamment la rotation de la tourelle par un actionneur rotatif, par exemple un moteur hydraulique.

Une première poignée de commande permet de lever ou de baisser le bras télescopique, d'incliner ou de baisser l'accessoire ou outil de travail dans une position désirée. Une deuxième poignée de commande permet le télescopage du bras télescopique ou la rétraction du bras télescopique, ainsi que la rotation de la tourelle vers la gauche ou de la tourelle vers la droite.

Une molette additionnelle disposée sur l'un des organes de commande permet de commander le travail d'un outil ou accessoire de travail particulier en fournissant une source d'énergie hydraulique destinée à un actionneur linéaire ou à un actionneur rotatif faisant partie de l'outil ou accessoire de travail.

Des machines de manutention disposant d'un actionneur ou d'un moteur équipé d'un organe de commande dudit actionneur ou moteur déplaçable pour le réglage d'une vitesse maximale de fonctionnement dudit actionneur ou moteur sont également connues comme l'illustre le brevet EP 0.343.839.

Un premier but de l'invention est de perfectionner le réglage des machines de manutention de type connu en fonction de l'environnement ou de l'accessoire monté sur la machine de manutention.

Un deuxième but de l'invention est de perfectionner le fonctionnement d'une machine de manutention en accroissant la sécurité et la stabilité de la machine par l'introduction de lois de commande spécifiques.

L'invention a pour objet un procédé de réglage d'une machine de manutention, comportant l'étape suivante :
a) Déplacer un organe de commande d'un actionneur ou d'un moteur pour régler une vitesse maximale de fonctionnement dudit actionneur ou moteur ;
caractérisé en ce que ledit procédé comporte en outre les étapes suivantes :
b) Mémoriser un réglage de vitesse maximale effectué à l'étape a) dans une mémoire appropriée ;
c) Assujettir le travail de la machine de manutention à une loi de commande appropriée en ne dépassant pas la ou les vitesse(s) maximale(s) de fonctionnement mémorisée(s).

Selon d'autres caractéristiques alternatives de l'invention :
- La mémorisation de l'étape b) est effectuée au moyen d'un organe de commande d'un actionneur ou d'un moteur.
- La loi de commande appropriée de l'étape c) est définie en fonction d'un accessoire ou d'un outil de travail de la machine de manutention.

L'invention a également pour objet une machine de manutention comportant une pluralité d'actionneurs et au moins un organe de commande d'actionneur, caractérisée par le fait qu'au moins un organe de commande d'actionneur est déplaçable dans un mode de réglage pour régler une vitesse maximale de fonctionnement d'un actionneur, de manière à assujettir le travail de la machine de manutention à une loi de commande appropriée en ne dépassant pas la ou les vitesses maximales réglées de fonctionnement.

Selon d'autres caractéristiques alternatives de l'invention :
- La machine de manutention comporte un moyen de mémorisation de vitesse réglée de fonctionnement d'actionneur.
- Un organe de commande d'actionneur porte un organe de mémorisation pour effectuer la mémorisation d'une vitesse réglée de fonctionnement d'actionneur dans ledit moyen de mémorisation.
- La machine de manutention comporte un moyen de reconnaissance d'outil ou d'accessoire de travail de machine de manutention.
- La machine de manutention contient un moyen définissant une loi de commande appropriée en fonction de la reconnaissance d'outil ou d'accessoire de travail effectuée par ledit moyen de reconnaissance.
- Le moyen définissant une loi de commande appropriée et le moyen de mémorisation sont avantageusement intégrés dans un calculateur du poste de commande de la machine de manutention.
- La machine de manutention peut comporter une tourelle rotative orientable entrainée par un actionneur rotatif, par exemple un moteur hydraulique.

L'invention sera mieux comprise grâce à la description qui va suivre donnée à titre d'exemple non limitatif en référence aux dessins annexés dans lesquels :
La figure 1 représente schématiquement un ordinogramme représentatif des étapes d'un procédé de réglage de machine de manutention selon l'invention.
La figure 2 représente schématiquement une pluralité de diagrammes de réglage illustrant le fonctionnement de la machine de manutention en mode réglé de travail.
La figure 3 représente schématiquement un schéma fonctionnel de machine de manutention selon l'invention.

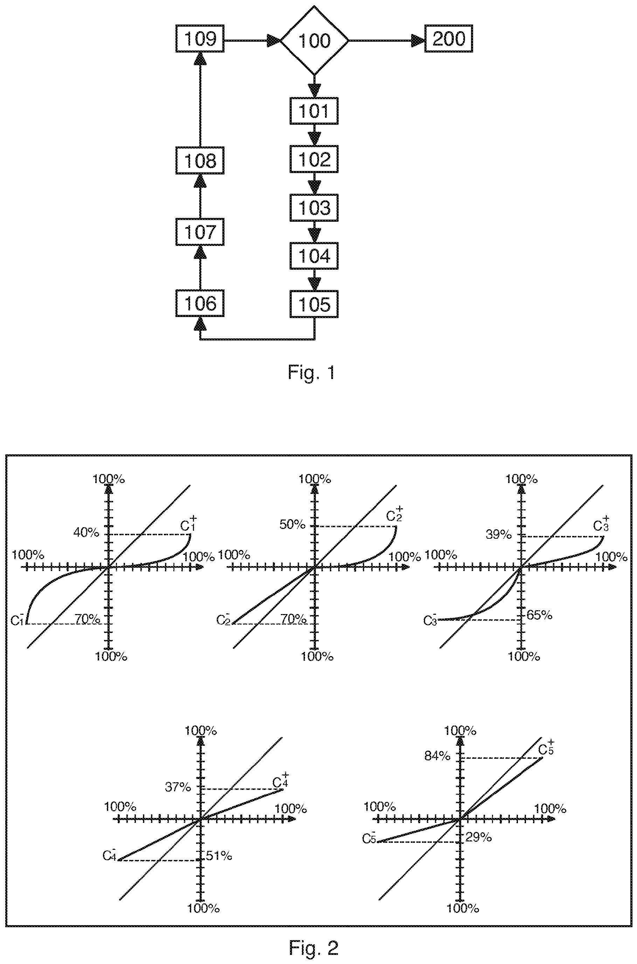

Sur la figure 1, un procédé de réglage de machine de manutention selon l'invention comporte des étapes 100 à 109.

À l'étape 100, l'opérateur effectue une sélection entre un mode de travail réglé ou un mode de travail standard.

Si l'opérateur choisit un mode de travail standard, dans lequel la vitesse des actionneurs peut être égale à 100 % de la vitesse nominale, le procédé continue à l'étape 200 de mode de travail standard.

Si l'opérateur choisit d'entrer dans un mode de réglage, le procédé continue à l'étape 101 de réglage du fonctionnement du vérin de levage.

L'opérateur agit à l'étape 101 sur l'organe de commande du vérin de levage pour imposer une vitesse maximale de levage et une vitesse maximale d'abaissement de l'actionneur linéaire de levage.

Ce réglage du vérin de levage étant effectué, l'opérateur passe à l'étape 102 de réglage du télescopage.

L'opérateur agit à l'étape 102 sur l'organe de commande de l'actionneur de télescopage pour imposer une vitesse maximale de sortie du télescope et une vitesse maximale de rentrée du télescope.

L'opérateur passe ensuite à l'étape 103 de réglage du fonctionnement du vérin d'inclinaison d'un accessoire ou d'un outil de travail.

L'opérateur agit à l'étape 103 sur l'organe de commande de l'actionneur d'inclinaison pour imposer une vitesse maximale d'inclinaison vers l'avant de l'outil ou accessoire de travail et une vitesse d'inclinaison maximale vers l'arrière de l'outil ou accessoire de travail.

L'opérateur passe ensuite à l'étape 104 de réglage d'une tourelle de rotation portant le bras télescopique de la machine de manutention selon l'invention.

L'opérateur choisit à l'étape 104 une vitesse maximale de rotation dans le sens droit de la tourelle, ainsi qu'une vitesse maximale de rotation dans le sens gauche de la tourelle.

L'opérateur passe ensuite à l'étape 105 de réglage du fonctionnement de travail d'un accessoire ou outil de travail.

L'opérateur règle à l'étape 105 le mode de fonctionnement actif de l'accessoire ou outil de travail, ainsi que le mode de dégagement ou de fonctionnement inactif de l'accessoire ou outil de travail.

Après avoir effectué les divers réglages de vitesse désirés, l'opérateur acquitte à l'étape 106 les réglages effectués en appuyant sur un organe auxiliaire d'un organe de commande pour effectuer une mémorisation des vitesses maximales de travail réglées pour les actionneurs précités.

L'opérateur accoste à l'étape 107 un outil ou un accessoire de travail correspondant au réglage prédéterminé et la machine effectue la reconnaissance de l'outil ou accessoire de travail au moyen d'un moyen de reconnaissance d'outil ou d'accessoire de travail, par exemple à l'aide d'une puce RFID pour reconnaître la nature de l'accessoire ou outil de travail et vérifier son bon montage.

À l'étape 108, la machine de manutention ayant reconnu l'accessoire ou outil de travail impose une loi de commande du fonctionnement pour effectuer un travail réglé en ne dépassant pas les vitesses maximales d'actionneur réglées aux étapes 101 à 105.

À l'étape 109, l'opérateur effectue le travail en mode réglé, en étant assujetti à la loi de commande intégrée dans la machine de manutention selon l'invention.

Le procédé de réglage de machine de manutention selon l'invention boucle ensuite à l'étape 100 de test du procédé de réglage selon l'invention.

Sur la figure 2, un ensemble de lois de commande est représenté à titre d'exemple en tenant compte des vitesses maximales de fonctionnement réglées pour divers actionneurs d'une machine de manutention selon l'invention.

L'ensemble de lois de commande est représenté pour les fonctions de levage, de télescopage, d'inclinaison, de rotation de tourelle et de fonctionnement d'un accessoire ou outil de travail d'une machine de manutention selon l'invention.

La courbe C₁⁺ représente une loi de commande de levage du bras télescopique avec une vitesse maximale de 40 % de la vitesse nominale de montée.

La courbe C₁⁻ représente une loi de commande d'abaissement du bras télescopique avec une vitesse maximale de 70 % de la vitesse nominale d'abaissement.

La courbe C₂⁺ représente une loi de commande de sortie du télescope avec une vitesse maximale de sortie de 50 % de la vitesse nominale maximale de sortie de télescope.

La courbe C₂⁻ représente une loi de commande linéaire de rentrée du télescope avec une vitesse maximale de 70 % de la vitesse nominale de rentrée de télescope.

La courbe C₃⁺ représente une loi de commande d'inclinaison vers l'avant d'un outil ou accessoire de travail avec une vitesse maximale d'inclinaison vers l'avant de 39 % de la vitesse nominale.

La courbe C₃⁻ représente une loi de commande d'inclinaison vers l'arrière d'un outil ou accessoire de travail avec une vitesse maximale d'inclinaison vers l'avant de 65 % de la vitesse nominale.

La courbe C₄⁺ représente une loi de commande de rotation dans le sens droit de la tourelle, avec une vitesse maximale de rotation dans le sens droit de la tourelle de 37 % de la vitesse nominale.

La courbe C₄⁻ représente une loi de commande de rotation dans le sens gauche de la tourelle avec une vitesse maximale de rotation dans le sens gauche de la tourelle de 51 % de la vitesse nominale.

La courbe C₅⁺ représente une loi de commande de dégagement ou de fonctionnement inactif de l'accessoire ou outil de travail avec une vitesse maximale de 84 % de la vitesse nominale de dégagement ou de fonctionnement inactif.

La courbe C₅⁻ représente une loi de commande de fonctionnement actif de l'accessoire ou outil de travail avec une vitesse maximale de 29 % de la vitesse nominale de fonctionnement actif de l'accessoire ou outil de travail.

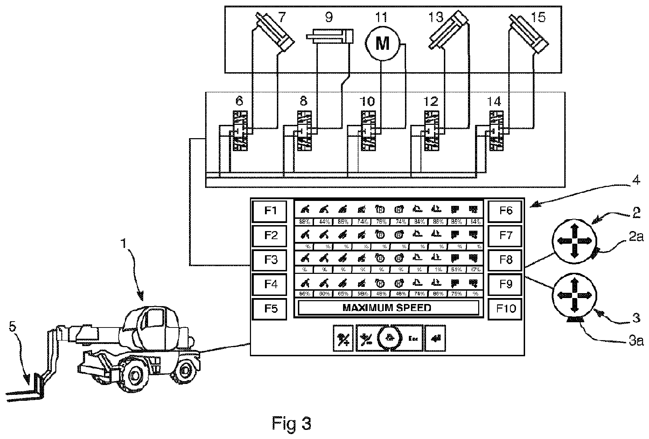

Sur la figure 3, une machine de manutention repérée dans son ensemble par (1) comporte une première poignée de commande (2) permettant d'effectuer le levage et l'abaissement du bras télescopique, ainsi que l'inclinaison vers l'avant ou vers l'arrière d'un outil ou accessoire (5) de travail.

La poignée de commande (2) comporte un bouton d'acquittement (2a) permettant de mémoriser des vitesses réglées.

La machine (1) de manutention comporte également une deuxième poignée de commande (3) permettant le télescopage du bras télescopique ainsi que la rotation d'une tourelle vers la gauche ou vers la droite.

La poignée de commande (3) porte une molette (3a) de commande du fonctionnement de l'outil ou accessoire (5).

L'outil ou accessoire (5) est reconnu par des moyens de reconnaissance sans contact appropriés, par exemple d'un système de reconnaissance sans contact utilisant la technologie RFID.

La reconnaissance de l'accessoire permet de prendre en compte automatiquement les paramètres de sécurité liés à l'outil ou à l'accessoire (5) de travail, notamment son abaque de charge.

La reconnaissance de l'accessoire ou outil (5) de travail permet également la vérification de la loi de commande et des vitesses maximales réglées par l'opérateur pour un travail en mode réglé de manière à assujettir le travail de la machine (1) de manutention à ne pas dépasser la ou les vitesse(s) maximale(s) réglée(s) de fonctionnement..

Les poignées de commande (2) et (3) sont reliées à un calculateur (4) permettant soit d'effectuer un fonctionnement en mode de travail standard à 100 % de la vitesse nominale de travail de chaque actionneur, soit à un mode de travail réglé à l'aide du procédé de réglage selon l'invention.

À cet effet, le calculateur (4) comporte un écran d'affichage et dix touches de fonctions numérotées F1 à F10.

Pour exécuter la suite d'une ou plusieurs étapes de réglage de la machine de manutention grâce à un procédé du type décrit en référence à la figure 1, l'opérateur exécute des séquences de réglage.

L'opérateur appuie par exemple sur la fonction F4 pour sélectionner une page d'affichage de calculateur.

L'opérateur choisit ensuite de régler une ou plusieurs vitesses d'actionneur en appuyant par exemple sur une des mémoires F6 à F9.

L'opérateur appuie par exemple sur la touche F6 de sélection de mémoire et règle successivement les paramètres correspondant aux vitesses dans un sens ou dans un autre d'un actionneur dédié à une fonction particulière.

La ligne F6 enregistre les réglages effectués par l'opérateur successivement pour la montée et la descente du bras télescopique, pour la sortie du bras télescopique, pour la rentrée du bras télescopique, pour la rotation de la tourelle vers la droite, pour la rotation de la tourelle vers la gauche, pour l'inclinaison vers l'arrière du tablier portant l'outil ou accessoire de travail, pour l'inclinaison vers l'avant du tablier portant l'outil ou accessoire de travail, pour le fonctionnement en position de dégagement de l'outil ou accessoire de travail et pour le fonctionnement actif en position d'attaque de l'outil ou accessoire de travail.

Dans le cas où l'opérateur ne souhaite pas travailler selon un mode réglé, il appuie sur la touche F10 qui correspond à la vitesse nominale de chaque actionneur.

Pour mémoriser les valeurs maximales réglées des actionneurs, l'opérateur appuie sur le bouton (2a) de la poignée de commande (2).

Dès que l'opérateur appuie sur le bouton (2a) de la poignée de commande (2), le pourcentage de vitesse maximale réglée de l'actionneur considéré dans le sens considéré s'affiche sous le pictogramme correspondant de la ligne mémoire correspondant à la touche F6.

Pour opérer selon un mode de travail programmé selon des lois de commande et des vitesses maximales réglées, il suffit d'appuyer sur la touche de fonction de travail associée, par exemple sur la touche F1 permettant de travailler selon la séquence mémorisée dans la mémoire correspondant à la touche F6.

L'invention est applicable à tout mode de fonctionnement et tout genre d'actionneur d'une machine de manutention.

Dans l'exemple particulier représenté, les actionneurs de la machine de manutention sont des actionneurs hydrauliques.

L'actionneur hydraulique (7) est un actionneur permettant le levage ou l'abaissement du bras télescopique. L'actionneur hydraulique (7) est relié à un distributeur électrohydraulique proportionnel (6) relié au calculateur (4).

L'actionneur hydraulique (9) est un actionneur de sortie ou de rentrée du bras télescopique. L'actionneur hydraulique (9) est commandé par un distributeur électrohydraulique proportionnel (8) relié au calculateur (4).

Le moteur (11) de tourelle peut être un moteur hydraulique ou un moteur électrique qui permet de tourner la tourelle dans un sens désiré, à droite ou à gauche, avec rotation totale. Dans l'exemple particulier, le moteur (11) de tourelle est un actionneur hydraulique rotatif (11) relié à un électrodistributeur hydraulique (10) proportionnel relié au calculateur (4).

L'actionneur hydraulique (13) est un actionneur d'inclinaison du tablier portant un outil ou accessoire (5) de travail. L'actionneur hydraulique (13) est relié à un électrodistributeur hydraulique (12) proportionnel relié au calculateur (4).

L'actionneur hydraulique (15) assure le fonctionnement de l'outil (5) ou accessoire en attaque, ou en dégagement. L'actionneur hydraulique (15) est relié à un électrodistributeur hydraulique (14) proportionnel relié au calculateur (4).

Dans le mode de travail avec réglage des vitesses maximales d'actionneur, les lois de commande sont vérifiées par le calculateur (4) et sont adaptées à l'outil (5) ou accessoire de travail reconnu par le moyen de reconnaissance sans contact faisant coopérer le tablier et l'outil ou accessoire de travail de la machine de manutention.

À titre d'outil ou accessoire de travail, on peut citer une paire de fourches, une potence, un treuil, un outil de forage, un outil d'élévation par vis sans fin, un godet de chargement, une fraise de terrassement, une benne désileuse, une bétonnière ou tout autre système apte à être monté en extrémité de bras télescopique ou de bras ou de mât de machine de manutention.

L'ajustement des vitesses maximales des actionneurs de la machine de manutention permet d'accroître la précision et la souplesse des manoeuvres. Le réglage des vitesses maximales d'actionneur et l'assujettissement à des lois de commande sont particulièrement utiles dans le cas de la manipulation de charges lourdes ou encombrantes, ou en cas de travail dans des emplacements étroits.

Les lois de commande les plus simples peuvent être des lois linéaires. Une loi de commande linéaire revient à étendre proportionnellement l'échelle de la poignée de commande pour associer à la vitesse maximale réglée d'un actionneur la course totale de la poignée de commande dans le sens d'actionnement correspondant.

Pour tenir compte de spécificités de la machine de manutention, en particulier en présence de mouvements aggravants pour la stabilité ou pour la sécurité de la machine, les lois de commande peuvent être non linéaires, par exemple en forme de « S », ou en forme de courbe exponentielle ou de courbe de puissance analogues à des courbes fournies par régulation PID ou des courbes représentatives d'une décharge de condensateur.

L'automatisation du réglage pour un outil ou accessoire de travail et pour une tâche particulière considérée permet d'accroître la sécurité et de limiter les erreurs d'opération de la machine de manutention.

Dans le cas d'un travail sur site à encombrement réduit, les lois de commande peuvent être combinées pour éviter une approche trop rapide des obstacles ou pour éviter des positions critiques pour la stabilité de la machine de manutention.

L'invention est en particulier applicable à des chariots à bras télescopique de type usuel, ne comportant pas de tourelle rotative.

L'invention est également applicable aux chariots industriels à mât, et à tout type de chariot de manutention tout terrain, ainsi qu'à des nacelles élévatrices de personnel.

L'invention est enfin applicable à tout mode de fonctionnement et tout genre d'actionneur d'une machine de manutention, notamment des actionneurs électriques, électrohydrauliques, ou autres.

## Revendications

1. Procédé de réglage d'une machine (1) de manutention, comportant l'étape suivante :
a) déplacer un organe de commande (2, 3) d'un actionneur (7, 9, 11, 13, 15) ou d'un moteur pour régler une vitesse maximale de fonctionnement dudit actionneur ou moteur (7, 9, 11, 13, 15) ;
**caractérisé en ce que** le procédé de réglage comporte en outre les étapes suivantes :
b) mémoriser un réglage de vitesse maximale effectué à l'étape a) dans une mémoire appropriée ;
c) assujettir le travail de la machine (1) de manutention à une loi de commande appropriée en ne dépassant pas la ou les vitesse(s) maximale(s) de fonctionnement mémorisée(s).

2. Procédé selon la revendication 1, **caractérisé par le fait que** la mémorisation de l'étape b) est effectuée au moyen d'un organe (2a) de commande d'un actionneur ou d'un moteur.

3. Procédé selon la revendication 1 ou la revendication 2, **caractérisé par le fait que** la loi de commande appropriée de l'étape c) est définie en fonction d'un accessoire (5) ou d'un outil de travail de la machine (1) de manutention.

4. Machine (1) de manutention pour la mise en oeuvre d'un procédé selon l'une quelconque des revendications 1 à 3, comportant une pluralité d'actionneurs (7, 9, 11, 13, 15) et au moins un organe (2, 3) de commande d'actionneur, **caractérisée par le fait qu'**au moins un organe (2, 3) de commande d'actionneur est déplaçable dans un mode de réglage pour régler une vitesse maximale de fonctionnement d'un actionneur, de manière à assujettir le travail de la machine (1) de manutention à une loi de commande appropriée en ne dépassant pas la ou les vitesse(s) maximale(s) réglée(s) de fonctionnement.

5. Machine selon la revendication 4, **caractérisée par le fait que** la machine (1) de manutention comporte un moyen (4) de mémorisation de vitesse(s) réglée(s) de fonctionnement d'actionneurs (7, 9, 11, 13, 15).

6. Machine selon la revendication 4 et la revendication 5, **caractérisée par le fait qu'**un organe (2) de commande d'actionneur porte un organe (2a) de mémorisation pour effectuer la mémorisation d'une vitesse réglée de fonctionnement d'actionneur dans ledit moyen (4) de mémorisation.

7. Machine selon la revendication 4, **caractérisée par le fait que** la machine (1) de manutention comporte un moyen de reconnaissance d'outil (5) ou d'accessoire de travail de machine (1) de manutention.

8. Machine selon la revendication 7, **caractérisée par le fait que** la machine (1) de manutention contient un moyen (4) définissant une loi de commande appropriée en fonction de la reconnaissance d'outil (5) ou d'accessoire de travail effectuée par ledit moyen de reconnaissance.

9. Machine selon la revendication 8, **caractérisée par le fait que** le moyen définissant une loi de commande appropriée et le moyen de mémorisation sont intégrés dans un calculateur (4) du poste de commande de la machine (1) de manutention.

10. Machine selon l'une quelconque des revendications 4 à 9, **caractérisée par le fait que** la machine (1) de manutention comporte une tourelle rotative orientable entraînée par un actionneur rotatif, par exemple un moteur (11) hydraulique.

## Patentansprüche

1. Verfahren zur Einstellung einer Bearbeitungsmaschine (1), das die folgenden Schritte aufweist:
a) Verlagern eines Steuerungsorgans (2, 3) eines Stellglieds (7, 9, 11, 13, 15) oder eines Motors zum Einstellen einer maximalen Funktionsgeschwindigkeit des Stellglieds oder Motors (7, 9, 11, 13, 15),
**dadurch gekennzeichnet, dass** das Einstellverfahren ferner die folgenden Schritte umfasst:
b) Speichern einer Einstellung einer maximalen Geschwindigkeit, durchgeführt in Schritt a), in einem geeigneten Speicher,
c) Unterwerfen der Arbeit der Bearbeitungsmaschine (1) einem geeigneten Steuerungsgesetz durch Nichtüberschreiten der gespeicherten maximalen Funktionsgeschwindigkeit(en).

2. Verfahren nach Anspruch 1, **dadurch gekennzeichnet, dass** das Speichern von Schritt b) mit einem Steuerungsorgan (2a) eines Stellglieds oder eines Motors durchgeführt wird.

3. Verfahren nach Anspruch 1 oder Anspruch 2, **dadurch gekennzeichnet, dass** das geeignete Steuerungsgesetz von Schritt c) in Abhängigkeit von einem Zubehör (5) oder einem Arbeitswerkzeug der Bearbeitungsmaschine (1) definiert wird.

4. Bearbeitungsmaschine (1) zur Umsetzung eines Verfahrens nach einen der Ansprüche 1 bis 3, aufweisend eine Vielzahl von Stellgliedern (7, 9, 11, 13, 15) und mindestens ein Stellglied-Steuerungsorgan (2, 3), **dadurch gekennzeichnet, dass** mindestens ein Stellglied-Steuerungsorgan (2, 3) in einen Einstellungsmodus verlagerbar ist, um eine maximale Funktionsgeschwindigkeit eines Stellglieds derart einzustellen, dass die Arbeit der Bearbeitungsmaschine (1) einem geeigneten Steuerungsgesetz durch Nichtüberschreiten der gespeicherten maximalen Funktionsgeschwindigkeit(en) unterworfen wird.

5. Maschine nach Anspruch 4, **dadurch gekennzeichnet, dass** die Bearbeitungsmaschine (1) ein Speichermittel (4) eingestellter Funktionsgeschwindigkeit(en) von Stellgliedern (7, 9, 11, 13, 15) aufweist.

6. Maschine nach Anspruch 4 und Anspruch 5, **dadurch gekennzeichnet, dass** ein Stellglied-Steuerungsorgan (2) ein Speicherorgan (2a) zur Durchführung der Speicherung einer eingestellten Funktionsgeschwindigkeit eines Stellglieds im Speichermittel (4) trägt.

7. Maschine nach Anspruch 4, **dadurch gekennzeichnet, dass** die Bearbeitungsmaschine (1) ein Erkennungsmittel eines Arbeitswerkzeugs (5) oder Zubehörs der Bearbeitungsmaschine (1) aufweist.

8. Maschine nach Anspruch 7, **dadurch gekennzeichnet, dass** die Bearbeitungsmaschine (1) ein Mittel (4) enthält, das ein geeignetes Steuerungsgesetz in Abhängigkeit von der Erkennung eines Arbeitswerkzeugs (5) oder Zubehörs definiert, durchgeführt vom Erkennungsmittel.

9. Maschine nach Anspruch 8, **dadurch gekennzeichnet, dass** das Mittel, welches ein geeignetes Steuerungsgesetz definiert, und das Speichermittel in einem Rechner (4) des Steuerungspostens der Bearbeitungsmaschine (1) integriert sind.

10. Maschine nach einen der Ansprüche 4 bis 9, **dadurch gekennzeichnet, dass** die Bearbeitungsmaschine (1) einen ausrichtbaren Rotationsarm aufweist, der von einem Rotationsstellglied, beispielsweise einem Hydraulikmotor (11), angetrieben wird.

## Claims

1. A method for adjusting a handling machine (1), including the following steps:
a) moving the control member (2, 3) of an actuator (7, 9, 11, 13, 15) or a motor to adjust a maximum operating speed of said actuator or said motor (7, 9, 11, 13, 15);
**characterized in that** the adjusting method further includes the following steps:
b) storing a maximum speed adjustment performed in step a) in an appropriate memory;
c) making the work of the handling machine (1) subject to an appropriate control law while not exceeding the storage maximum operating speed(s).

2. The method according to claim 1, **characterized in that** the storage of step b) is done using a control member (2a) of an actuator or a motor.

3. The method according to claim 1 or claim 2, **characterized in that** the appropriate control law of step c) is defined as a function of an accessory (5) or a work tool of the handling machine (1).

4. A handling machine (1) for carrying out a method according to any one of claims 1 to 3, including a plurality of actuators (7, 9, 11, 13, 15) and at least one actuator control member (2, 3), **characterized in that** at least one actuator control member (2, 3) is movable in an adjustment mode to adjust a maximum operating speed of an actuator, so as to make the work of the handling machine (1) subject to an appropriate control law while not exceeding the adjusted maximum operating speed(s).

5. The machine according to claim 4, **characterized in that** the handling machine (1) includes a means (4) for storing adjusted actuator operating speed(s) (7, 9, 11, 13, 15).

6. The machine according to claim 4 and claim 5, **characterized in that** an actuator control member (2) bears a storage member (2a) in order to store an adjusted actuator operating speed in said storage means (4).

7. The machine according to claim 4, **characterized in that** the handling machine (1) includes a recognition means (5) for a tool or work accessory of a handling machine (1).

8. The machine according to claim 7, **characterized in that** the handling machine (1) contains a means (4) defining an appropriate control law as a function of the tool or work accessory recognition (5) done by said recognition means.

9. The machine according to claim 8, **characterized in that** the means defining an appropriate control law and the storage means are integrated into a computer (4) of the control station of the handling machine (1).

10. The machine according to any one of claims 4 to 9, **characterized in that** the handling machine (1) comprises an orientable rotating tower driven by a rotating actuator, for example a hydraulic motor (11).
